# EUROPEAN PATENT SPECIFICATION

(11) **EP 3 344 581 B1**
(45) Date of publication and mention of the grant of the patent: **15.07.2020**
(21) Application number: 16763558.0
(22) Date of filing: 26.08.2016
(51) Int. Cl.: C02F 1/28, B01J 20/24, B01J 20/28, C02F 1/66, C02F 101/10, C02F 103/10, C02F 1/38, C02F 1/72, C02F 1/74, C02F 103/16

(54) **REMOVAL OF SULFUR SUBSTANCES FROM AN AQUEOUS MEDIUM WITH A SOLID MATERIAL**
ENTFERNUNG VON SCHWEFELSUBSTANZEN AUS EINEM WÄSSRIGEN MEDIUM MIT EINEM FESTSTOFF
ÉLIMINATION DES SUBSTANCES SOUFRÉES D'UN MÉDIUM AQUEUX AVEC UNE MATIÈRE SOLIDE

(30) Priority: 01.09.2015 FI 20155626
(43) Date of publication of application: 11.07.2018
(73) Proprietor: Bioso4 OY, 71800 Siilinjärvi (FI)
(72) Inventor: AALTO, Juha-Matti, 71800 Siilinjärvi (FI); KANKKUNEN, Janne, 70260 Kuopio (FI); VEPSÄLÄINEN, Jouko, 70780 Kuopio (FI)
(74) Representative: Laine IP Oy
(86) International application number: PCT/FI2016/050587
(87) International publication number: WO 2017/037335

(56) References cited:
- WO-A1-2013/184699
- MORET A ET AL: "Sulphate and molybdate ions uptake by chitin-based shrimp shells", MINERALS ENGINEERING, PERGAMON PRESS , OXFORD, GB, vol. 16, no. 8, 1 August 2003 (2003-08-01) , pages 715-722, XP027537567, ISSN: 0892-6875 [retrieved on 2003-08-01]

## Description

### FIELD OF THE INVENTION

The present invention is related to water treatment and purification, more particularly to a novel method for sulfur substance removal from an aqueous medium.

### BACKGROUND OF THE INVENTION

Sulfur occurs naturally as the pure element (native sulfur) and as sulfide (oxidation state - 2) and sulfate (oxidation state +6) minerals. Various sulfur chemicals (e.g. sulfuric acid, sulfur dioxide, hydrogen sulfide, sulfide salts, sulfite salts, sulfate salts, sulfur containing detergents and surfactants and thiosulfates) and sulfur fertilizers are widely used by industry and by households. On the other hand, sulfur compounds are formed in many industrial processes (e.g. oil and gas industry, heat and power industry, chemical industry). Once inorganic sulfur chemicals and compounds enter a water stream in most cases they are oxidized by air through a series of reactions to sulfate. Inorganic sulfur compounds and chemicals present in an aqueous medium can be oxidized e.g. with hydrogen peroxide, hypochlorite, chlorine gas, permanganates and ozone.

Sulfur compounds, especially sulfate ions (SO₄²⁻) are an increasingly common contaminant of different water streams (waste waters, surface waters and ground waters) making them unsuitable for human and animal consumption and crop irrigation. In addition, sulfate ions promote corrosion and scaling in pipes, (concrete) structures and equipment and can interfere with various processes making recycling of sulfate containing waters challenging. As such sulfate in not highly toxic to life, but sulfate increases salinity in receiving waters (sulfates are present as dissolved salts) and may cause secondary toxic effect when sulfate is biologically reduced to toxic hydrogen sulfide (H₂S). Sulfate containing waters such as acid mine drainage (or acid rock drainage) or industrial process wastewaters are typically acidic increasing solubility of harmful metals from rocks and soil.

High sulfate water streams are generated for example by mining industry, by metallurgical industries, by chemical industry and by oil and gas mining operations. There are two main ways how significant amounts of dissolved sulfate ions enter into a water stream: 1) because of the use of sulfur chemicals and reagents (sulfuric acid, sulfur dioxide, sulfite and sulfate salts, sulfide salts, thiosulfates, etc.) in industry processes and households; and 2) as a result of oxidation of sulfur containing minerals and soil. Oxidation of sulfur containing minerals may take place during ore processing and during a so called acid mine drainage (AMD) process. The AMD process refers to oxidation of sulfur bearing minerals when they are exposed to oxygen (air) and water resulting in generation of sulfuric acid. In addition to sulfate AMD waters typically contain dissolved heavy metals. The generation of AMD is a serious environmental problem worldwide. Sulfate anion is stable in water and sulfate forms salts with most metal ions. Inorganic sulfate salts are highly water soluble with few exceptions and their solubility in water varies from grams to hundreds of grams per liter. Dissolved sulfate concentrations in untreated industrial wastewaters and ore processing wastewaters typically vary from thousands to tens of thousands mg/l, whereas AMD waters typically contain hundreds to few thousands mg/l sulfate.

Current US Environmental Protection Agency recommendation for maximum sulfate level in drinking water is below 250 mg/l, in some countries drinking water maximum sulfate level is below 500 mg/l. Livestock drinking water recommendations vary, but e.g. in UK and Canada recommendation is below 500 mg/l sulfate for calves and below 1000 mg/l for adult livestock. Sulfate discharge levels vary from country to another and within each country from location to another, but in most cases discharge levels are currently from 500 to 2000 mg/l sulfate. There is clear trend that sulfate discharge levels are getting tighter as there is an increasing need for recycled water as process water and as drinking and irrigation water.

A traditional method to remove sulfate from an aqueous stream is lime precipitation to neutralize acidity and precipitate calcium sulfate. However, depending on the ionic strength and ionic composition of the sulfate containing water, sulfate concentrations 1800 mg/l or higher will remain after lime precipitation. Although several methods have been developed for sulfate removal, calcium precipitation of sulfate is still the most used method.

Methods available for removing dissolved sulfate from different waters can be divided to chemical precipitation processes (e.g. lime, Barium salts and ettringite), membrane processes (e.g. nanofiltration, reverse osmosis, electrodialysis and reversed electrodialysis), ion-exchange processes and biological processes (sulfate reduction). A review of sulfate treatment processes developed for mining industry has been described in Chapter 7 of "The Global Acid Rock Drainage Guide" (The GARD Guide), prepared by The International Network for Acid Prevention (INAP), 2010, the GARD Guide can be found at www.gardguide.com. Another review of sulfate treatment processes available for mine sites has been published in South Africa by Department of Water Affairs (DWA), 2013: Feasibility Study for a Long-term Solution to address the Acid Mine Drainage associated with the East, Central and West Rand underground mining basins. Study Report No. 5.4: Treatment Technology Options DWA Report No.: P RSA 000/00/16512/4. The report can be found at http://www.dwaf.gov.za/Proiects/AMDFSLTS/Documents/Report%205.4%20-%20Treatment%20Technology%20Options%20Edition%201%20Final%20Signed%20-%20Full.pdf.

According to Simate and Ndlovu in "Acid mine drainage: Challenges and opportunities", Journal of Environmental Chemical Engineering 2 (2014): 1785-1803, acid mine drainage was recognized as an emerging problem already in the 1970's. Although extensive research and development work to solve the sulfate problem has been carried out, required combination of scale, resources and credibility to deal with the problem is still lacking.

It is known in the art that polysaccharide chitosan and its derivatives can be used to remove dissolved heavy metal cations, suspended solids and industrial dyes from wastewater. Use of chitosan and chemically modified chitosans in wastewater purification has been reviewed by Guibal in "Interactions of metal ions with chitosan-based sorbents: a review", Sorption and Purification Technology 38 (2004):43-74, and by Vakili and co-workers in "Application of chitosan and its derivatives as adsorbents for dye removal from water and wastewater: A review", Carbohydrate Polymers 113(2014):115-130.

Use of water-soluble chitosan in a sulfate removal method is described in WO 2013/184699, wherein water-soluble chitosan is used as a flocculant. First calcium salt is added to form calcium sulfate precipitate, secondly water-soluble chitosan is added to form chitosan-calcium sulfate complex, thirdly water-soluble anionic polymer is added to form aggregates comprising calcium sulfate, chitosan and anionic polymer and fourthly aggregates are filtered from aqueous medium to remove sulfate from the medium.

CN 101284693 A discloses a method for preparing a flocculating agent by degrading chitosan and dissolving the degraded chitosan with an organic acid under heating. The flocculating agent finally obtained may be used e.g. in sugar industry, in wastewater treatment, in paper making industry or in food industry.

Use of chitin flakes for simultaneous removal of sulfate and molybdate ions is described by Moret and Rubio in "Sulphate and molybdate ions uptake by chitin-based shrimp shells", Minerals Engineering 16 (2003):715-722. The method described by Moret and Rubio removed 80-110 mg sulfate per gram of chitin flakes from mining effluents and optimum equilibrium pH of the reaction was 4.5. Removal of other sulfur substances than sulfate is not described.

At the beginning of the reaction, Moret and Rubio added a known volume of hydrochloric acid required to attain the equilibrium pH of the sulfate removal reaction. During sulfate removal reaction pH was not adjusted so the reaction pH varied from less than 2.0 to about 4.5 during the reaction. They tested chitosan flakes in their method and observed that chitosan flakes dissolved significantly in their sulfate removal method. This is not surprising as hydrochloric acid is a known solvent for chitosan. Hydrochloric acid is not preferred in industrial processes as chloride and sulfate ions are known to be highly corrosive together for process equipment, pipes etc.

Waste disposal is an important aspect of any water treatment or purification process. In reaction conditions described by Moret and Rubio, chitinous materials will bind several heavy metal ions such as iron, copper, nickel, zinc, lead and mercury, in addition to sulfate, as deacetylated chitin is known to bind heavy metal cations when pH of the reaction is around 4 or higher. Also at pH about 4 or higher several heavy metal ions may coprecipitate with ferric iron if present in an aqueous medium. In addition, chitinous material will bind chloride ions to some extent if present in aqueous solution and therefore the use of hydrochloric acid for pH adjustment will increase chloride binding to chitinous material. These ions will complicate both the disposal and the regeneration of sulfate containing chitinous material as heavy metal cations limit the possibilities of using sulfur containing chitinous material as a raw material for sulfur chemicals and fertilizers.

The present invention overcomes the problems of the prior art and accomplishes a novel method for efficient removal of sulfur substances from an aqueous medium in acidic pH by solid material comprising 2-amino-2-deoxy-d-glucopyranose structural units.

### SUMMARY OF THE INVENTION

The method of the present invention is based on the interaction between solid material comprising 2-amino-2-deoxy-d-glucopyranose structural units and dissolved negatively charged sulfur substances in acidic aqueous medium and subsequent separation of the sulfate containing solid material from the aqueous medium. A method, a composition and a use are provided according to independent claims 1, 15 and 16, respectively. These claims define the essential features of the invention. Preferred embodiments are described in dependent claims 2-14, 17. The disclosed method comprises the steps:
(a) combining solid material comprising 2-amino-2-deoxy-d-glucopyranose structural units and an aqueous medium comprising sulfur substances to form a composition;
(b) controlling, and if necessary adjusting, and keeping the pH of the composition at a value lower than or equal to 3.5 with a non-chloride substance, during binding of sulfur substances to the solid material; and
(c) separating the solid material from the aqueous medium to remove the sulfur substances.

Considerable advantages are achieved with the present invention compared with sulfate removal methods known in the art:
a) The disclosed method is able to reduce sulfate concentration of an aqueous medium below 50 mg/l when the starting sulfate concentration of the aqueous medium is below 1000 mg/l, and below 500 mg/l, when the starting sulfate concentration of the aqueous medium is 2000 to 3000 mg/l. These levels are much lower than what can be reached with most known sulfate removal methods. Concentration of sulfur substances in the starting aqueous medium can vary from less than hundred mg/l to several thousand mg/l.
b) The disclosed method is robust and simple:
   ∘ binding of sulfate to solid material comprising 2-amino-2-deoxy-d-glucopyranose structural units occurs in most cases in only 1 to 10 minutes;
   ∘ binding of sulfate is not inhibited by the presence of a few thousand mg/l dissolved common alkali and earth alkaline metal ions such as calcium, magnesium, sodium and potassium;
   ∘ pH of the aqueous sulfate containing medium can be from about 1 to 13;
   ∘ the solid material comprising 2-amino-2-deoxy-d-glucopyranose structural units can be formulated to flakes, powder, granules, nanoparticles, beads, fibers, membranes and sponge;
   ∘ sulfate binding is efficient in cold and cool aqueous solutions (temperature from +2°C to +60°C);
   ∘ sulfate containing solid material can be separated from aqueous medium with several methods depending on formulation of the solid material such as filtration, centrifugation, binding to solid support and gravity settling; and
   ∘ addition of energy source, electron donor(s) and micronutrients are not needed as with biological sulfate reduction methods.
c) The disclosed method is safe to humans and environment:
   ∘ no toxic chemicals such as barium salts are used;
   ∘ no toxic chemicals are formed during the method;
   ∘ no toxic (e.g. H2S, Cl₂) or explosive (H2) gases are formed;
   ∘ solid material comprising 2-amino-2-deoxy-d-glucopyranose structural units such as chitin or chitosan is a natural biodegradable biopolymer safe to humans and environment.
d) The disclosed method is easily applicable to acidic and basic wastewaters and dewatering waters.
e) The disclosed method can be easily combined with commonly used water treatment processes such as neutralization and metals removal with HDS process or its variants, lime precipitation of sulfate, removal of soluble metals and/or suspended solids with iron or aluminium coagulation, oxidation of soluble metals ions and sulfur substances and desalination.
f) The present invention can be used to remove sulfur substances such as sulfate, bisulfate, sulfite, bisulfite, metabisulfite, sulfide, bisulfide and thiosulfate from an aqueous medium.

Moreover, the sulfur substance removal method of the present invention has distinct advantages compared to the method described by Moret and Rubio:
- the method of the present invention can be used to remove several different sulfur substances from an aqueous medium;
- sulfur binding per gram of adsorbent is much higher;
- hydrochloric acid has been replaced by non-chloride substances, such as other acids or acidic materials to minimize solubility of the adsorbent;
- the present method is more specific for sulfur compound removal; and
- pH below 3.5 during the sulfur compound removal step will inhibit microbial growth and increase the stability of the sulfur substance containing solid material comprising 2-amino-2-deoxy-d-glucopyranose structural units.

The optimal equilibration pH of the reaction in this invention is below 3.5 and with the disclosed invention 150 to 300 mg sulfate per gram of solid material comprising 2-amino-2-deoxy-d-glucopyranose structural units can be removed e.g. from a mining effluent. This means that the same sulfate removal level is achieved with much less sulfate binding material, compared e.g. to the method of Moret and Rubio. In addition to sulfate removal, the present invention can be used to remove also other sulfur substances such as bisulfate, sulfite, bisulfite, metabisulfite, sulfide, bisulfide and thiosulfate from an aqueous medium.

The solubility issue of chitosan and other solid materials comprising 2-amino-2-deoxy-d-glucopyranose structural units is minimized in the disclosed invention. This is achieved by using non-chloride substances, especially by avoiding the use of hydrochloric acid, for pH adjustment and by controlling reaction pH during the binding reaction.

Further, in the present invention the binding of heavy metal cations to solid material comprising 2-amino-2-deoxy-d-glucopyranose structural units is minimized by controlling the pH of the sulfur substance removal reaction and/or by performing sulfur substance removal after removal of heavy metals from an aqueous medium by other methods.

### DETAILED DESCRIPTION OF THE INVENTION

The present invention relates to a novel method for removing sulfur substances from an aqueous medium.

A "sulfur substance" in the context of the present invention refers to any inorganic substance comprising one or more sulfur atoms or elemental sulfur. Examples of sulfur substances present in aqueous mediums comprise sulfate (SO₄²⁻), bisulfate (HS0₄⁻), sulfite (SO₃²⁻); bisulfite (HSO₃⁻), metabisulfite (S₂O₅²⁻), sulfide (S²⁻), bisulfide (HS⁻), thiosulfate (S₂O₃²⁻), dithionate (S₂O₆²⁻), sulfur dioxide (SO₂) and hydrogen sulfide (H₂S). Excellent results have been obtained with the present method in the removal of sulfur substances such as sulfates, thiosulfates, sulfites and sulfides. Sulfur atoms in sulfates have oxidation state +6 and sulfates are very stable in aqueous mediums. Sulfur substances in which sulfur has an oxidation state other than +6, are labile in acidic aqueous medium or may not have negative net charge in acidic aqueous medium, may be oxidized in aqueous mediums to sulfates with suitable oxidants comprising air, oxygen, ozone, chlorates, permanganates, and hydrogen peroxide prior to removal from an aqueous medium with the disclosed method.

The method of the present invention is based on the interaction between solid material comprising 2-amino-2-deoxy-d-glucopyranose structural units and dissolved sulfur substances present in an aqueous medium. The interaction between dissolved sulfur substances and solid material is between protonated amine groups of the 2-amino-2-deoxy-d-glucopyranose structural units and negatively charged part(s) of dissolved sulfur substances. Efficient interaction requires that pH of the composition comprising said solid material and an aqueous medium containing sulfur substances is adjusted and kept below or equal to 3.5 during sulfate binding reaction, even below or at most 3.0 if strong acids are used for pH adjustment.

Sulfur substance binding to said solid material will be inhibited when pH of the composition comprising the solid material and aqueous medium increases to about 4 or above. At pH about 4 the amount of protonated amine groups of the 2-amino-2-deoxy-d-glucopyranose structural units will to be too low for efficient binding of anionic sulfur substances from an aqueous medium. On the other hand, it is known that free amine groups of the 2-amino-2-deoxy-d-glucopyranose structural units are able to bind heavy metal ions e.g. copper at pH about 4 or higher. Therefore efficient sulfur substance removal with the disclosed method requires pH adjustment of the composition comprising solid material and aqueous medium during sulfur compound binding reaction. The method of the present invention is especially suitable for removing sulfate from acidic waters having an initial pH from 1 to 3.

Examples of solid materials comprising 2-amino-2-deoxy-d-glucopyranose structural units are chitosan and chitin. Chitin is an abundant, natural, long chain polysaccharide consisting of β-(1-4)-N-acetyl-d-glucosamine. Chitin is found in structural components of exoceletons in crustaceans and insects, chitin is also produced by fungi and algae. Chitosan is manufactured from chitin by partial deacetylation of β-(1-4)-N-acetyl-d-glucosamine subunits to yield 2-amino-2-deoxy-d-glucopyranose structural units. Deacetylation degree of natural chitin is about 4 to 15 % whereas in industrial chitosan deacetylation degree varies typically from about 70 to 95 %. A chitinous polymer is defined as chitosan when deacetylation degree of the polymer is over 50 % and chitin when deacetylation degree is below 50 %. Degree of deacetylation i.e. the ratio of 2-amino-2-deoxy-d-glucopyranose to 2-acetamido-2-deoxy-d-glucopyranose structural units defines polymer solubility and solution properties. Properties of chitin and chitosan have been reviewed by Pillai and co-workers in "Chitin and chitosan polymers: Chemistry, solubility and fiber formation", Progress in Polymer Science 34 (2009):641-678.

In the context of the present invention, "solid material comprising 2-amino-2-deoxy-d-glucopyranose structural units" refers to one or several materials selected from the group consisting of chitin, chitosan, chitin derivative, chitosan derivative, any combination thereof, and any solid materials wherein 2-amino-2-deoxy-d-glucopyranose structural units are attached. Examples of solid material comprising 2-amino-2-deoxy-d-glucopyranose structural units are chitosan composites and graft copolymers of chitosan. Further examples include non-chitinous modified polymers, magnetic beads and nanoparticles, which include 2-amino-2-deoxy-d-glucopyranose structural units in efficient amounts.

In a preferred embodiment, the solid material comprising 2-amino-2-deoxy-d-glucopyranose structural units consists essentially of chitin, chitosan, chitin derivative, chitosan derivative or any combination thereof.

According to another preferred embodiment of the invention, the solid material comprising 2-amino-2-deoxy-d-glucopyranose structural units consists of chitin, chitosan, chitin derivative, chitosan derivative or any combination thereof.

One preferred solid material comprising 2-amino-2-deoxy-d-glucopyranose structural units is chitosan, preferably chitosan with a deacetylation degree of about 70 to 95%, more preferably chitosan with a deacetylation degree of about 80-90%.

The efficient amount of solid material comprising 2-amino-2-deoxy-d-glucopyranose structural units for removing sulfur substances from the composition comprising said solid material and an aqueous medium comprising sulfur substances is 0.2 to 50 g/l, preferably 0.5 to 20 g/l, and even more preferably 1.0 to 10 g/l. In case of chitin, chitosan and their derivatives, the efficient amount also depends on the particle size of chitin, chitosan, their derivatives or combinations. A preferred solid material comprising 2-amino-2-deoxy-d-glucopyranose structural units is chitosan or chitin, preferably chitosan in the form of flakes.

In case the solid material comprising 2-amino-2-deoxy-d-glucopyranose structural units is any solid material comprising 2-amino-2-deoxy-d-glucopyranose structural units in efficient amounts, the efficient amount of 2-amino-2-deoxy-d-glucopyranose structural units is at least 0.2%, preferably at least 1.0%, and even more preferably at least 5% or at least 10% by weight of the solid material.

An advantage of the present invention is that the disclosed method is capable of removing sulfur substances from aqueous mediums having a highly variable composition. Sulfur substance concentration may vary from few tens or hundreds to several thousand mg/l, for example 40 to 35 000 mg/l, or 100 - 10 000 mg/l, for example 200 - 2000 mg/l. The amount of dissolved alkali and earth alkaline metal ions such as sodium, potassium, calcium and magnesium concentration may vary from tens to several thousand mg/l. For example, the disclosed method is able to reduce sulfate concentration of an aqueous medium below 50 mg/l when the starting sulfate concentration of an aqueous medium is below 1000 mg/l, and below 500 mg/l, when the starting sulfate concentration of an aqueous medium is from 1000 to 3000 mg/l.

Thus the method according to the present invention can be used for removing sulfur substances from aqueous mediums and water streams of various sources, such as surface waters, ground waters, industrial process waste waters (mining, metallurgical and chemical industry, oil and gas mining operations, paper and pulp industry). The method according to the present invention is especially useful for the treatment of acidic waters containing sulfur substances corresponding to 200 to 2000 mg sulfur/l.

An another advantage of the present invention is that in addition to sulfate and bisulfate anions it can be used to remove sulfite, bisulfite, metabisulfite, sulfide, bisulfide and thiosulfate from an aqueous medium. Sulfur substances in which sulfur has an oxidation state other than +6, are labile or may not have negative net charge in acidic aqueous mediums, are oxidized to sulfates with suitable oxidants comprising air, oxygen, ozone, chlorates, permanganates and hydrogen peroxide prior to removal from aqueous mediums with the disclosed method. For example, when sulfides and thiosulfates are oxidized to sulfates in alkaline pH with hydrogen peroxide, the sulfate removal with the disclosed method can be done right after oxidation step (reaction time a few minutes) as there is no need to inactivate possible hydrogen peroxide remains.

In an embodiment of the invention wherein the separated, sulfur substance containing solid material comprising the 2-amino-2-deoxy-d-glucopyranose structural units is either to be regenerated and recycled in sulfur substance removal process or to be used as a raw material for sulfur fertilizers or sulfur chemicals, pH during sulfur substance binding step is adjusted low enough to prevent binding of unwanted metal ions to said solid material and to prevent binding and formation of precipitates of unwanted metal ions. For example, heavy metal cations such as ferric ions start to form hydroxide precipitates from aqueous mediums at pH about 3 or higher so by keeping sulfur substance binding step pH below 3, ferric hydroxide precipitate formation will be minimized. Preferably, sulfur substance removal reaction is done after removal of heavy metal cations from an aqueous solution to minimize binding/precipitation of heavy metal ions to said solid material during sulfur substance removal.

The pH of the composition during sulfur substance binding step can be adjusted with any non-chloride acidic substance which is able to reduce pH below or equal to 3.5 and which does not dissolve significantly solid material comprising the 2-amino-2-deoxy-d-glucopyranose structural units. Examples of such materials comprise mineral acids, organic acids, mixtures of two or more acids and the like, hydrochloric acid excluded.

The pH of the composition during sulfur substance binding step is adjusted with a non-chloride acidic material or with an acid having conjugate base which can be easily removed after sulfate removal. Examples of such compounds comprise oxalic acid, citric acid, malic acid, phosphoric acid, solid metal chelators and any mixtures thereof.

The pH of the composition during sulfur substance binding step is adjusted with a non-chloride acidic material or with a non-chloride acid, the residues of which are metabolized by microorganisms and/or by plants from water after sulfur substance removal. Examples of such compounds comprise oxalic acid, citric acid, malic acid, tartaric acid and any mixtures thereof.

Preferred examples of acidic substances for pH adjustment of the composition include nitric acid, phosphoric acid, citric acid, oxalic acid, malic acid, tartaric acid, EDTA, a bisphosphonate or a cation exchanger, or any combination thereof.

According to the invention, acidic material for pH adjustment is mixed with solid material comprising 2-amino-2-deoxy-d-glucopyranose structural units and the mixture is combined with an aqueous medium containing sulfur substance. The acidic material may be in the form of solid or liquid acidic material. Examples of solid acidic material are crystalline organic acids or solid bisphosphonates. Preferably, the solid acidic material is citric acid, oxalic acid, malic acid, tartaric acid, EDTA, a bisphosphonate or a cation exchanger, or any combination thereof.

According to one embodiment of the invention, pH adjustment of an aqueous medium is started before combining the aqueous medium with solid material comprising 2-amino-2-deoxy-d-glucopyranose structural units.

An advantage of the present invention is that solid material comprising 2-amino-2-deoxy-d-glucopyranose structural units can be formulated e.g. as flakes, powder, granules, nanoparticles, beads, fibers, membranes and sponges.

A preferred solid material comprising 2-amino-2-deoxy-d-glucopyranose structural units is chitosan in the form of flakes of the size of few millimeters, e.g. 3 to 5 mm, preferably 2 to 4 mm. Flakes are preferred over powder since the separation of flakes from the aqueous medium after the sulfur binding reaction is often easier than separation of the powder form.

An advantage of the present invention is that the method is efficient within a temperature range of from about +2 to +60°C, or preferably from about +4 to +50°C, so it can be used to remove sulfur substances from cold and cool aqueous mediums without heating. The sulfur binding reaction is fastest around +20 to 30°C.

Contact time of the solid material comprising 2-amino-2-deoxy-d-glucopyranose structural units and the aqueous medium comprising sulfur substances varies depending on the sulfur substance composition of the aqueous medium, temperature, pH, and the amount of said solid material used and can be optimized by a person skilled in the art. Usually reaction times of 1 to 30 min, preferably 1 to 15 min, when the temperature is about +2 to +60°C , or even 1 to 10 min (temperature of an aqueous solution above 10°C) are sufficient.

Several different sulfur substance removal processes can be designed and built with different operation scale and process equipment based on the sulfur substance removal method of the present invention. The processes may be either continuous or batch processes.

According to one embodiment of the invention, sulfur substance removal from an aqueous medium is carried out using a batch process, wherein a volume of aqueous medium comprising sulfur substance is collected, then a required amount of solid material comprising 2-amino-2-deoxy-d-glucopyranose structural units and the aqueous medium are combined in a mixing tank having a pH control system, the resulting composition is mixed and reaction pH is controlled and kept at a value lower than or equal to 3.5 for 1 to 30 min in the mixing tank, and finally the sulfur substance containing solid material is separated from the aqueous medium and the aqueous medium is discharged.

In some embodiments, sulfur substance removal is made using a continuous process wherein an aqueous medium comprising sulfur substance and a required amount of solid material comprising 2-amino-2-deoxy-d-glucopyranose structural units are continuously added e.g. to a mixing tank having a continuous pH control system and continuous mixing to form a composition, allowing 1 to 30 min contact time at a pH value lower than or equal to 3.5 for said composition in the mixing tank by adjusting flow of the aqueous medium from 60 times to 2 times of the volume of the mixing tank per hour and keeping the mixing tank volume constant by leading said composition continuously from the mixing tank to the separation of sulfur substance containing solid material from said composition and discharging the treated aqueous medium.

Batch process format is preferred when the flow of an aqueous medium comprising sulfur substances is low (e.g. flow is few cubic meters per day or less and you can collect the aqueous medium to a tank or to a pool) or when the composition of the incoming aqueous medium is highly variable. Continuous process format is preferred when flow of an aqueous medium is high (e.g. tens of cubic meters per hour or more) and the composition of the incoming aqueous medium is relatively stable.

A further advantage of the present invention is that the disclosed method can easily be combined with other water treatment processes comprising removal of soluble metals (as hydroxides, carbonates or sulfides), removal of sulfate ions with lime (as gypsum), removal of soluble harmful metals and/or suspended solids with coagulation - flocculation, oxidization of inorganic and/or organic compounds (with air, hydroxide peroxide, chlorites, Fenton-reaction, permanganates etc.), removal of solid particles (sedimentation, coagulation -flocculation, filtration, flotation etc.), desalination (e.g. nanofiltration or reverse osmosis), separation of sludge (e.g. by centrifugation, filtration, pressure filtration or clarification), dewatering of sludge (e.g. by belt filter press), pH adjustment and membrane techniques.

In an embodiment of the invention, combining of solid material comprising 2-amino-2-deoxy-d-glucopyranose structural units and an aqueous medium containing sulfur substances can be done with an advanced mixing technology such as TrumpJet™ mixing technology developed by Wetend Technologies Ltd (Savonlinna, Finland).

In an another embodiment of the invention, sulfur substance containing solid material can be removed from aqueous mediums by processes such as filtration, sieving (e.g. using bow screens), centrifugation, cyclonic separation, flotation, column process or sedimentation (e.g. using settling ponds or clarifiers).

In an embodiment of the invention, the sulfur substance containing solid material can be dewatered after separation from aqueous medium, e.g. by using belt filter press, pressure filtration or vacuum filtration.

In an embodiment of the invention, sulfur substance removal from an aqueous medium may be carried out in sequential cycles using the method of the present invention.

In an embodiment of the invention, sulfur substance removal from an aqueous medium may be carried out in column format by filling a column with said solid material comprising 2-amino-2-deoxy-d-glucopyranose structural units, if necessary adding acidic material for pH adjustment and control to the aqueous medium, and running the aqueous medium through the column.

In an embodiment of the present invention, the disclosed method is combined with one or several biological wastewater treatment processes in order to remove sulfur substances before biological process(es) to reduce the generation of toxic hydrogen sulfide.

In an embodiment of the invention, metal binding property of solid material comprising 2-amino-2-deoxy-d-glucopyranose structural units or precipitation of metal cations after binding reactions may be utilized to remove sulfur substances and soluble metal cations at the same time. This can be done e.g. by first enabling binding of sulfur substances to said solid material, secondly adjusting pH enabling binding of metal cations to said solid material or inducing precipitation of metal cations and thirdly removing solid material and possible metal cation precipitate from aqueous medium.

In an embodiment of the invention, sulfur substance is removed from an aqueous medium in order to be able to return the aqueous medium back to the water cycle, e.g. to release to surface waters. Aqueous medium will be acidic after separation of the sulfur substance containing solid material from the aqueous medium. Before releasing the resulting low sulfur aqueous medium back to the water cycle, remaining acidity must be neutralized using any alkaline compound, for example calcium carbonate, calcium oxide, calcium hydroxide, sodium hydroxide, sodium carbonate, potassium hydroxide or potassium carbonate. In some cases, calcium compounds are preferred as calcium ions react efficiently with conjugate bases of some acids.

In an embodiment of the invention, a small amount of solid material comprising 2-amino-2-deoxy-d-glucopyranose structural units may dissolve during sulfur removal to aqueous medium depending on the composition and pH of the aqueous medium. A small amount of dissolved solid material does not have any significant effect on sulfur substance removal efficiency of the disclosed method.

A further object of the invention is a solid composition comprising solid material comprising 2-amino-2-deoxy-d-glucopyranose structural units for sulfate binding and solid acidic material for pH adjustment. The solid acidic material is preferably crystalline organic acid, such as citric acid, oxalic acid, malic acid, tartaric acid, EDTA, a solid bisphosphonate or a cation exchanger, or any combination thereof. The solid material comprising 2-amino-2-deoxy-d-glucopyranose structural units is preferably chitin, chitosan, chitin derivative, chitosan derivative or any combination thereof.

There is also a package disclosed comprising solid material comprising 2-amino-2-deoxy-d-glucopyranose structural units for sulfate binding and acidic material for pH adjustment. In said package, the solid material comprising 2-amino-2-deoxy-d-glucopyranose structural units is preferably chitin, chitosan, chitin derivative, chitosan derivative or any combination thereof. The acidic material is preferably non-chloride acidic material in solid or liquid form. The acidic material and the solid material comprising 2-amino-2-deoxy-d-glucopyranose in said package are for a simultaneous, separate or sequential use in a method for removing sulfur substances from an aqueous medium.

### EXAMPLES

Sulfur substance removal from an aqueous medium with solid material comprising 2-amino-2-deoxy-d-glucopyranose structural units was tested with chitosan and real wastewater and dewatering samples from two operational mines. Sulfur substance removal tests were carried out in laboratory as so called JAR-tests and selected laboratory tests were repeated as batch tests in field conditions at mines. It is obvious to a person skilled in the art how sulfur substance removal processes and sulfur substance removal plants can be designed and build on the basis of the enclosed examples illustrating the disclosed invention.

### EXAMPLE 1 - REMOVAL OF SULFATE FROM MINE A DEWATERING WATER IN LABORATORY

Sulfate removal with solid chitosan composition was tested in a laboratory scale using JAR equipment (KemWater Flocculator 2000) and dewatering water of mine A. Dewatering water was treated with ferric sulfate to remove dissolved heavy metal ions and solid particles and clarified before chitosan composition treatment. Main constituents of the ferric sulfate treated dewatering water used in JAR tests were sulfate (880 mg/l), calcium (260 mg/l), magnesium (50 mg/l), sodium (40 mg/l) and potassium (10 mg/l), pH of the water was 5.0 and temperature +20 °C. Sulfate removal JAR test was made by adding chitosan powder (4 g) to 800 ml of dewatering water in JAR reaction chamber. Mixing speed was 300 RPM and reaction pH was kept below 3.0 during mixing with nitric acid. Samples for sulfate concentration measurement were taken from the JAR reaction chambers before chitosan addition (0 min) and after 30 min of mixing and filtered through a 0.45 µm filter. Dissolved sulfate concentration from filtered samples were determined according to Hach method "Sulphate_8051" using Hach DR 2800 spectrophotometer and SulfaVer 4 reagent. The results are presented in table 1.

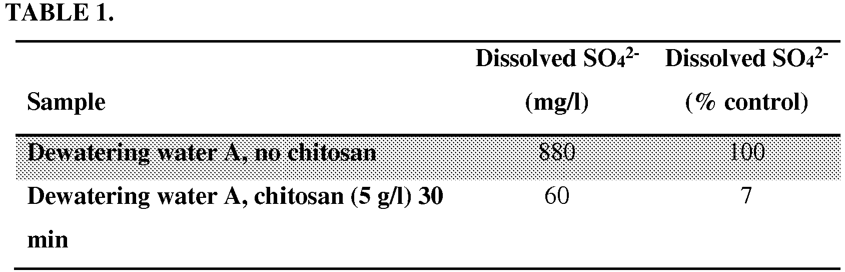

Results in table 1 show that sulfate removal with chitosan composition can be done after ferric sulfate coagulation and clarification of mine dewatering water. Chitosan composition removed over 90% of sulfate from mine dewatering water, sulfate binding was about 160 mg sulfate per gram of solid chitosan composition.

### EXAMPLE 2 - REMOVAL OF SULFATE FROM MINE B DEWATERING WATER IN LABORATORY

Sulfate removal with solid chitosan composition was tested in laboratory scale using JAR equipment (KemWater Flocculator 2000) and dewatering water of mine B. Dewatering water was treated with sodium hydroxide to remove dissolved aluminum and iron and suspended solids and clarified before chitosan composition treatment. Main constituents of the treated dewatering water used in JAR tests were sulfate (2600mg/l), sodium (670 mg/l), calcium (390 mg/l), magnesium (70 mg/l) and potassium (50 mg/l), pH of the water was 8.4 and temperature +10 °C. Sulfate removal JAR tests were made by adding chitosan powder (0, 2, 4 or 8 g) to 800 ml of dewatering water in JAR reaction chambers. Mixing speed was 300 RPM and reaction pH was kept below 3.0 during mixing with nitric acid. Samples for sulfate concentration measurement were taken from the JAR reaction chambers before chitosan addition (0 min) and after 30 min of mixing and filtered through a 0.45 µm filter. Dissolved sulfate concentration from filtered samples were determined according to Hach method "Sulphate_8051" using Hach DR 2800 spectrophotometer and SulfaVer 4 reagent. The results are presented in table 2.

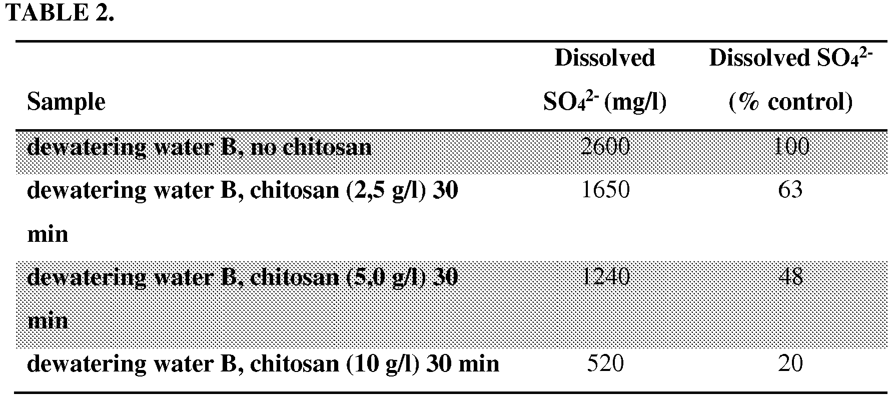

Results in table 2 show that chitosan composition treatment can be combined with hydroxide precipitation of suspended solids and soluble metals such as aluminum and iron. Solid chitosan composition removed sulfate effectively and sulfate removal was dose dependent: dose 2.5 g/l removed about 1/3 from dissolved sulfate, 5.0 g/l dose removed 50 % and 10 g/l dose removed 80 %. Sulfate binding efficiency varied from 200 to 380 mg sulfate per gram of solid chitosan composition.

### EXAMPLE 3 - REMOVAL OF SULFATE FROM MINE A DEWATERING WATER IN FIELD CONDITIONS

Sulfate removal with solid chitosan composition was tested with dewatering water in field conditions in mine A. Dewatering water was treated with ferric sulfate to remove dissolved heavy metal ions and solid particles and clarified before chitosan composition treatment. Main constituents of the dewatering water used in chitosan test were sulfate (840 mg/l), calcium (300 mg/l) and magnesium (50 mg/l), pH of the water was 6.8 and temperature +9 °C. Sulfate removal was made in a 200 l container by mixing 900 g chitosan powder with 180 l of ferric sulfate treated and clarified dewatering water. Mixing was done with a submersible drainage pump and pH of the reaction was kept below 3.0 during mixing with nitric acid. Samples for sulfate concentration measurement were taken from the container before chitosan addition (0 min) and after 10, 20 and 40 min of mixing and filtered through a 0.45 µm filter. Dissolved sulfate concentration from each filtered sample was determined according to Hach method "Sulphate_8051" using Hach DR 2800 spectrophotometer and SulfaVer 4 reagent. The results are presented in table 3.

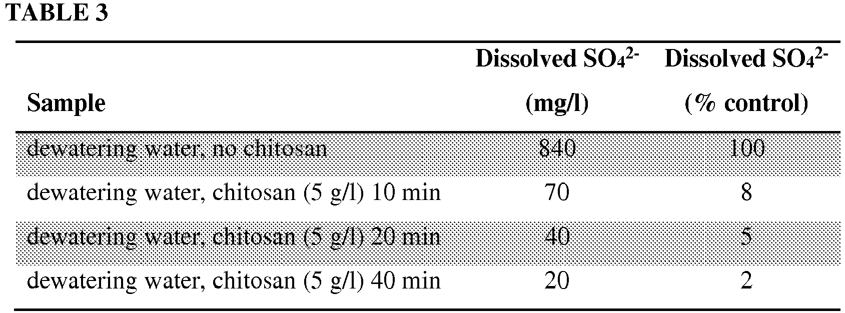

Example 3 shows that sulfate removal can be done with chitosan composition after ferric sulfate coagulation and gravity settling of dewatering water in field conditions using relatively simple equipment. Results in table 3 show that chitosan composition treatment reduced sulfate level from mine A dewatering water from 840 mg/l below 50 mg/l. The chitosan treatment was simple and fast process as most of the sulfate was bound to chitosan composition in less than 10 minutes and reaction was efficient in cool water (temperature +9 °C). The chitosan treatment was done with simple equipment (a container, a submersible drainage pump and a pH-meter) and reagents (chitosan powder and nitric acid). Sulfate binding efficiency was about 160 mg sulfate per gram of solid chitosan composition. It is obvious those skilled in process technology that on the basis of this simple batch process several processes can be designed and developed for removal of sulfate from aqueous mediums.

### EXAMPLE 4 - REMOVAL OF SULFATE FROM ORE PROCESSING WASTE WATER IN FIELD CONDITIONS

Sulfate removal with solid chitosan composition was tested in field conditions with high strength ore processing wastewater of mine C. Ore processing waste water was collected from the place of discharge just before chitosan composition treatment. Main ionic constituents of the ore processing wastewater were sulfate (8000 mg/l); magnesium (1900 mg/l); calcium (400 mg/l), sodium (200 mg/l) and potassium (150 mg/l), pH of the water was 8.25 and temperature +6 °C. Sulfate removal was made in a 200 l container by mixing 1440 g chitosan powder with 180 l of ore processing wastewater. Mixing was done with a submersible drainage pump and pH of the reaction was kept below 3.0 during mixing with nitric acid. Samples for sulfate concentration measurement were taken from the container before chitosan addition (0 min) and after 10, 20 and 40 min of mixing and filtered through a 0.45 µm filter. Dissolved sulfate concentration from each filtered sample was determined according to Hach method "Sulphate_8051" using Hach DR 2800 spectrophotometer and SulfaVer 4 reagent. The results are presented in table 4.

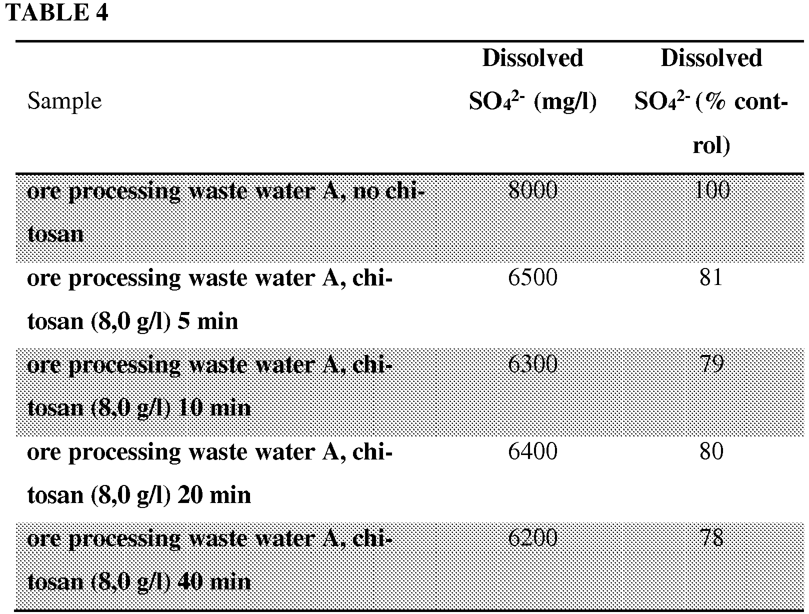

Results in table 4 show that solid chitosan composition is capable of removing sulfate directly from high strength sulfate wastewater. Used chitosan composition dose removed about 1700 mg/l sulfate (about 20 %) from ore processing waste water sulfate levels in few minutes in cold water (+6 °C), sulfate binding efficiency was about 200 mg sulfate per gram of solid chitosan composition. This water is difficult water for lime precipitation of sulfate as it contains high amounts of dissolved magnesium.

### EXAMPLE 5 - REMOVAL OF SULFATE FROM LIME-TREATED ORE PROCESSING WASTE WATER IN FIELD CONDITIONS

Calcium hydroxide precipitation (Lime precipitation, gypsum precipitation) is a commonly used method to reduce sulfate levels of mineral processing wastewaters. In this example a novel two step sulfate removal procedure was tested with ore processing waste water of mine C: in the first step majority of the sulfate was precipitated with calcium hydroxide as gypsum and in the second step clarified water from the first step was treated with solid chitosan composition to remove sulfate beyond levels achievable with lime precipitation. The test was carried out in field conditions at mine C and ore processing waste water was collected from the place of discharge. Main ionic constituents of the ore processing waste water were sulfate (8000 mg/l); magnesium (1880 mg/l); calcium 410 mg/l, sodium (175 mg/l) and potassium (145 mg/l), pH of the water was 8.25 and temperature +6 °C. Sulfate precipitation with calcium hydroxide (step one) was performed in a 200 l container by mixing 1440 g Ca(OH)₂ with 180 l fresh ore processing waste water. Mixing was done with a submersible drainage pump for 70 min to ensure complete dissolution of added Ca(OH)₂ and then the reaction mixture (pH 12) was let to settle overnight.

After 16 hours clarified water (130 1) from calcium precipitation container was removed to another 200 l container for chitosan treatment. Main ionic constituents of the clarified water were sulfate (1950 mg/l), calcium (750 mg/l), sodium (150 mg/l) and potassium (130 mg/l), pH was 12.0 and water temperature was +10 °C. Chitosan composition treatment (step two) was carried out by mixing 1040 g chitosan powder to 130 l clarified water from step one. Mixing was done with a submersible drainage pump and reaction mixture pH was kept below 3.0 with nitric acid. Samples for sulfate concentration measurement were taken from the reaction mixture before chitosan addition (0 min) and after 5, 10, 20 and 40 min of mixing and filtered through a 0.45 µm filter. Dissolved sulfate concentration from each filtered sample was determined according to Hach method "Sulphate_8051" using Hach DR 2800 spectrophotometer and SulfaVer 4 reagent. The results are presented in table 5.

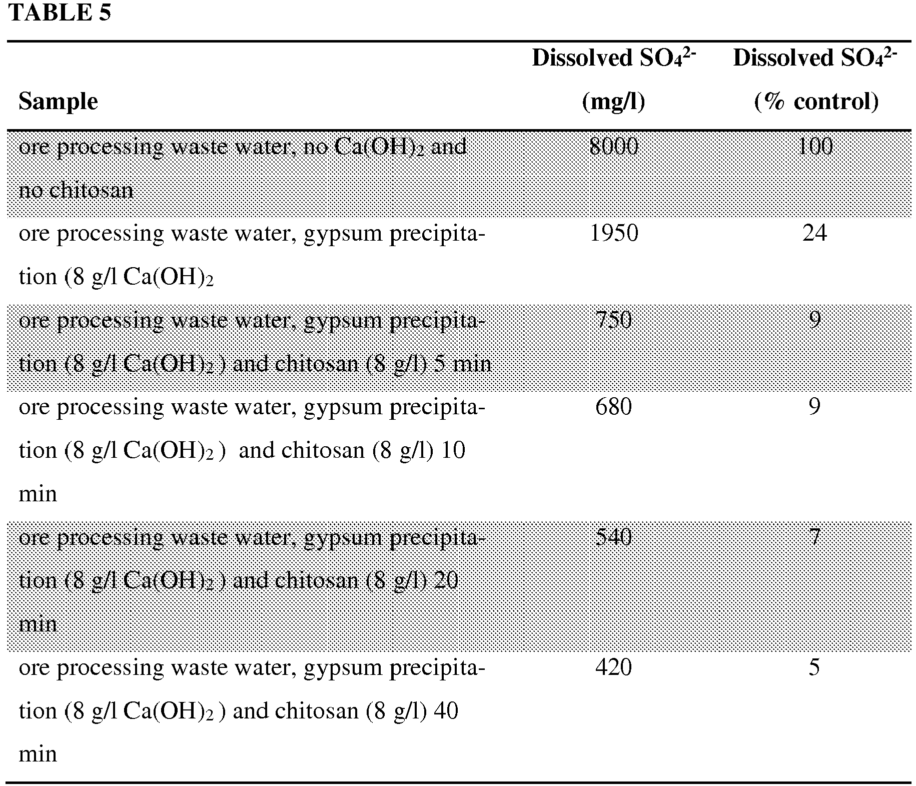

Example 5 shows how gypsum precipitation and disclosed sulfate removal method can be easily combined to a novel, highly efficient sulfate removal process for high strength sulfate waters. Results in table 5 demonstrate that combined gypsum precipitation and subsequent chitosan composition treatment reduced ore processing waste water sulfate levels from 8000 mg/l below 500 mg/l. This novel process was much more efficient for sulfate removal as gypsum precipitation alone which reduced sulfate levels only to about 2000 mg/l, sulfate binding efficiency was about 190 mg sulfate per gram of solid chitosan composition. Although this example describes a batch process, it is obvious that the combined gypsum precipitation and solid chitosan composition treatment can be easily changed into a continuous process with information provided in this example.

### EXAMPLE 6 - REMOVAL OF THIOSULFATE FROM AN AQUEOUS MEDIUM

Thiosulfate removal with solid chitosan composition was tested in a laboratory scale using JAR equipment (KemWater Flocculator 2000) and dewatering water of mine A spiked with sodium thiosulfate 5-hydrate (CAS 10102-17-7). Dewatering water was treated with ferric sulfate to remove dissolved heavy metal ions and solid particles and clarified before spiking with thiosulfate and subsequent chitosan composition treatment. Main constituents of the spiked, ferric sulfate treated dewatering water used in JAR tests were sulfate (830 mg/l), thiosulfate (520 mg/l), calcium (300 mg/l), magnesium (70 mg/l), sodium (60 mg/l) and potassium (50 mg/l), pH of the water was 9.5 and temperature +10 °C. Before JAR tests one water sample was oxidized with hydrogen peroxide (2 ml/l 30% H₂O₂, 30 min mixing 400 RPM) to convert the thiosulfate to sulfate. JAR tests (800 ml) were carried out using chitosan flakes (8 g). Control sample was prepared without hydrogen peroxide oxidation and without chitosan. Mixing speed was 400 RPM and pH of the reactions was kept below 3.0 during mixing with nitric acid. Samples for sulfur concentration measurement were taken from the JAR reaction chambers before chitosan addition (0 min) and after 10 min of mixing. Dissolved sulfur concentration from centrifuged (1559 x g, 5 min, RT) samples were determined with Panalytical Epsilon3-XL EDXRF benchtop spectrometer. The results are presented in table 6.

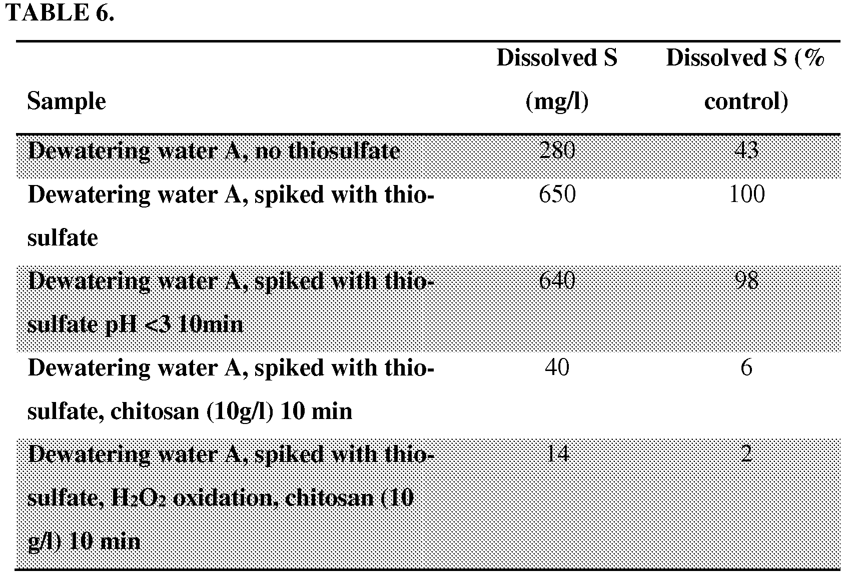

Example 6 shows how thiosulfate can be removed from an aqueous medium using the disclosed method. Results in table 6 demonstrate that chitosan composition removed efficiently both thiosulfate and sulfate from ferric sulfate coagulated and clarified mine dewatering water spiked with thiosulfate. The results also demonstrate that the chitosan composition was able to remove thiosulfate anions without prior oxidization to sulfate. Oxidation of thiosulfate to sulfate with hydrogen peroxide prior to solid chitosan composition treatment eliminated the formation of elemental sulfur and sulfur dioxide from thiosulfate in acidic medium and thus eliminated related unpleasant odors. Sulfate binding efficiency was about 60 mg sulfur (about 180 mg sulfate) per gram of solid chitosan composition.

### EXAMPLE 7 - REMOVAL OF SULFITES FROM AN AQUEOUS MEDIUM

Sulfite removal with solid chitosan composition was tested in a laboratory scale using JAR equipment (KemWater Flocculator 2000) and dewatering water of mine A spiked with sodium sulfite (CAS 7757-83-7) or sodium metabisulfite (CAS-7681-57-4). Dewatering water was treated with ferric sulfate to remove dissolved heavy metal ions and solid particles and clarified before spiking with sulfite and subsequent chitosan composition treatment. Main constituents of the spiked, ferric sulfate treated dewatering water used in JAR tests were sulfate (880 mg/l), sulfite (750 mg/l), calcium (300 mg/l), magnesium (70 mg/l), sodium (60 mg/l) and potassium (50 mg/l), pH of the water was 9.5 and temperature +10 °C. Before JAR tests one water sample was oxidized with hydrogen peroxide (1.6 ml/l 30% H₂O₂, 60 min mixing 400 RPM) to convert the sulfite to sulfate. JAR tests (800 ml) were carried out using chitosan powder (8 g). Control sample was prepared without hydrogen peroxide oxidation and without chitosan. Mixing speed was 400 RPM and pH of the reactions was kept below 3.0 during mixing with nitric acid. Samples for sulfur concentration measurement were taken from the JAR reaction chambers before chitosan addition (0 min) and after 10 min of mixing. Dissolved sulfur concentration from centrifuged (1559 x g, 5 min, RT) samples were determined with Panalytical Epsilon3-XL EDXRF benchtop spectrometer. The results are presented in table 7.

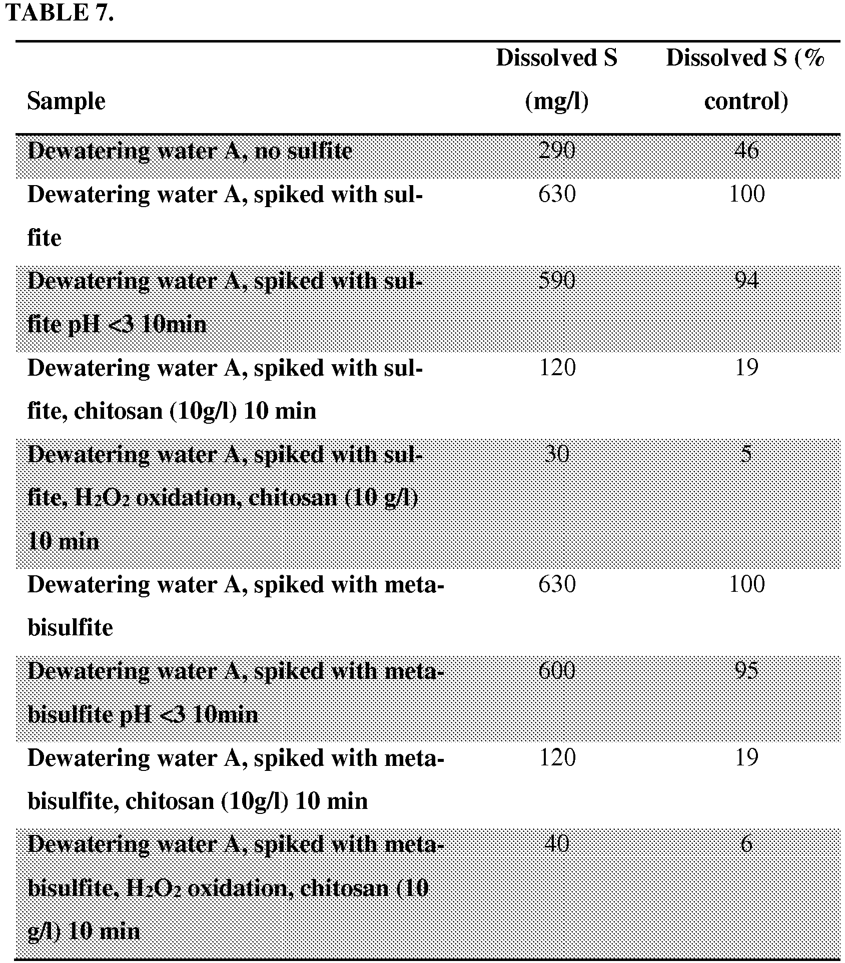

Example 7 shows how sulfite or metabisulfite can be removed from an aqueous medium using the disclosed method. Results in table 7 demonstrate that chitosan composition removed efficiently both sulfite and sulfate or metabisulfite and sulfate from ferric sulfate coagulated and clarified mine dewatering water spiked with sulfite or metabisulfite. The results also demonstrate that oxidization of sulfite to sulfate prior chitosan composition addition enhances sulfite removal from an aqueous medium and minimizes the formation of volatile sulfur dioxide from sulfite or metabisulfite in acidic mediums. This example shows that sulfite and metabisulfite can be removed safely from an aqueous medium by oxidizing sulfites e.g. with hydrogen peroxide to sulfate and then removing the sulfate with the disclosed method. Sulfite or metabisulfite oxidation can be done with hydrogen peroxide also in acidic conditions, but some sulfur dioxide will evaporate from acidic waters until all sulfites have been oxidized to sulfate. Sulfate binding efficiency was about 60 mg sulfur (about 180 mg sulfate) per gram of solid chitosan composition.

### EXAMPLE 8 - REMOVAL OF SULFIDES FROM AN AQUEOUS MEDIUM

Sulfide removal with solid chitosan composition was tested in a laboratory scale using JAR equipment (KemWater Flocculator 2000) and dewatering water of mine A spiked with sodium sulfide (CAS 27610-45-3). Dewatering water was treated with ferric sulfate to remove dissolved heavy metal ions and solid particles and clarified before spiking with sulfide and subsequent chitosan composition treatment. Main constituents of the spiked, ferric sulfate treated dewatering water used in JAR tests were sulfate (800 mg/l), sulfide (250 mg/l), calcium (300 mg/l), magnesium (70 mg/l), sodium (60 mg/l) and potassium (15 mg/l), pH of the water was 11.5 and temperature +10 °C. Before JAR tests one water sample was oxidized with hydrogen peroxide (5,0 ml/l 30% H₂O₂, 25 min mixing 400 RPM) to convert the sulfide to sulfate. JAR tests (800 ml) were carried out using chitosan powder (8 g). Control sample was prepared without hydrogen peroxide oxidation and without chitosan. Mixing speed was 400 RPM and pH of the reactions was adjusted below 3.0 during mixing with nitric acid. Samples for sulfur concentration measurement were taken from the JAR reaction chambers before chitosan addition (0 min) and after 10 min of mixing. Dissolved sulfur concentration from centrifuged (1559 x g, 5 min, RT) samples were determined with Panalytical Epsilon3-XL EDXRF benchtop spectrometer. The results are presented in table 8.

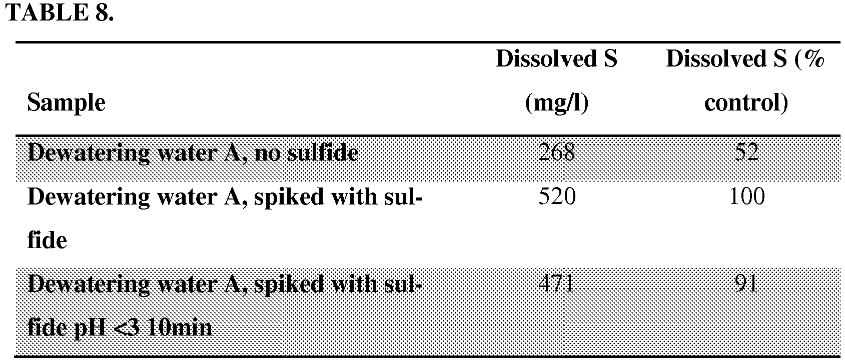

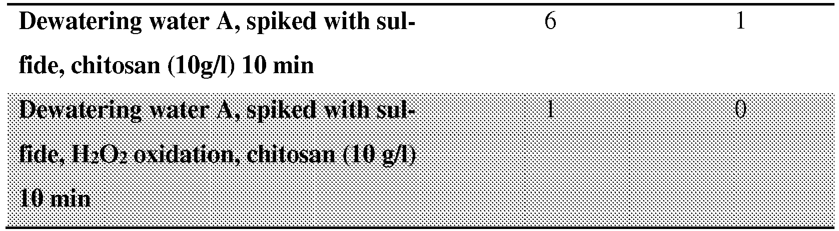

Example 8 shows how toxic sulfide can be removed from an aqueous medium safely using the disclosed method. Results in table 8 demonstrate that chitosan composition removed efficiently both sulfide and sulfate from ferric sulfate coagulated and clarified mine dewatering water spiked with sulfite. The results also demonstrate that oxidization of sulfite to sulfate prior chitosan composition addition enhances sulfide removal from an aqueous medium, at the same time oxidization also minimizes formation of toxic hydrogen sulfide from sulfide in acidic mediums. During chitosan composition treatment (pH < 3,0) there was no hydrogen sulfide smell in the H₂O₂ oxidized sample whereas there was clear hydrogen sulfide smell in other samples. This example shows that sulfides can be removed safely from an aqueous medium by oxidizing sulfides in alkaline conditions e.g. with hydrogen peroxide to sulfate and then removing the sulfate with the disclosed method. Sulfate binding efficiency was about 50 mg sulfur (about 150 mg sulfate) per gram of solid chitosan composition.

### EXAMPLE 9 - REMOVAL OF SULFATE FROM AN AQUEOUS MEDIUM WITH DIFFERENT CHITOSAN COMPOSITIONS

Sulfate removal with different solid chitosan compositions was tested in a laboratory scale using JAR equipment (KemWater Flocculator 2000) and neutralized wastewater of mine D. Main constituents of the the neutralized waste water used in JAR tests were sulfate (3300 mg/l), calcium (550 mg/l) and sodium (600 mg/l), pH of the water was 9.3 and temperature +10 °C. JAR tests (800 ml) were carried out using 8 g chitosan flakes from manufacturer A or from manufacturer B or 8 g chitosan powder from manufacturer C. Mixing speed was 400 RPM and pH of the reactions was kept below 3.0 during mixing with nitric acid. Samples for sulfur concentration measurement were taken from the JAR reaction chambers after 20 min of mixing. Dissolved sulfur concentration from centrifuged (1559 x g, 5 min, RT) samples were determined with Panalytical Epsilon3-XL EDXRF benchtop spectrometer. The results are presented in table 9.

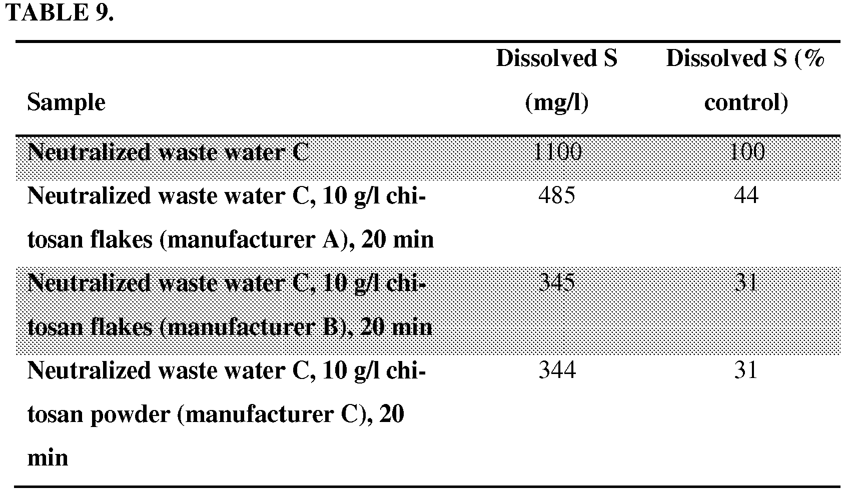

Example 9 shows that sulfate removal can be done with different chitosan compositions. Results in table 9 show that chitosan flakes and powder can be used in the disclosed method to remove sulfate from an aqueous medium. Sulfate binding efficiency was about 60-75 mg sulfur (about 180-220 mg sulfate) per gram of solid chitosan composition.

### EXAMPLE 10 - REMOVAL OF SULFATE FROM AN AQUEOUS MEDIUM WITH CHITOSAN COMPOSITION: USE OF DIFFERENT ACIDS FOR pH CONTROL

Suitability of various acids for pH control were tested in the disclosed method in a laboratory scale using JAR equipment (KemWater Flocculator 2000) and dewatering water of mine A. Dewatering water was treated with ferric sulfate to remove dissolved heavy metal ions and solid particles and clarified before chitosan composition treatment. Main constituents of the ferric sulfate treated dewatering water used in JAR tests were sulfate (880 mg/l), calcium (300 mg/l), magnesium (70 mg/l), sodium (60 mg/l) and potassium (50 mg/l), pH of the water was 7.5 and temperature +10 °C. JAR tests (800 ml) were carried out using 4 g chitosan powder. Mixing speed was 400 RPM and pH of the reactions was kept below 3.5 during mixing with nitric acid, oxalic acid, malic acid, tartaric acid or citric acid. Samples for sulfur concentration measurement were taken from the JAR reaction chambers after 10 min of mixing. Dissolved sulfur concentration from centrifuged (1559 x g, 5 min, RT) samples were determined with Panalytical Epsilon3-XL EDXRF benchtop spectrometer. The results are presented in table 10.

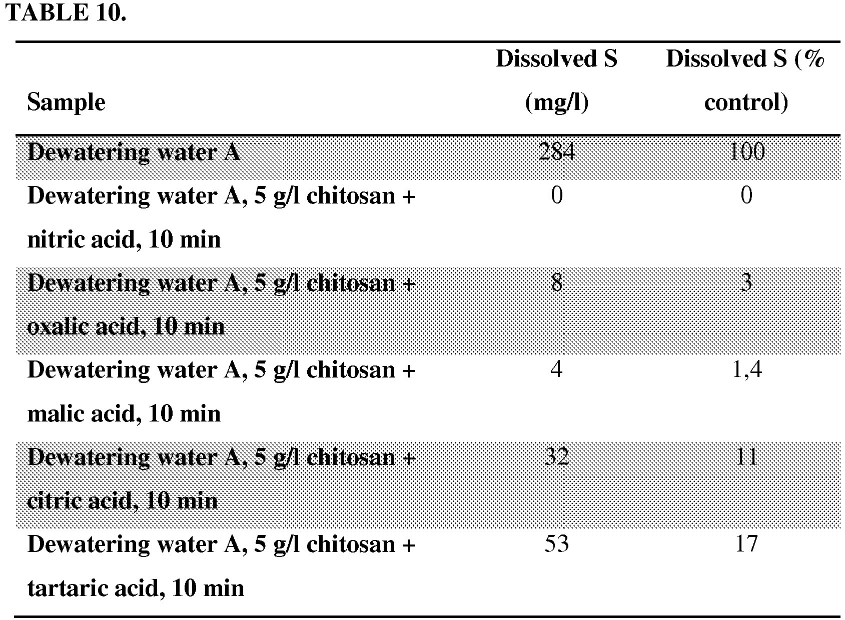

Example 10 shows that several acids can be used for pH adjustment and control in the disclosed sulfur substance removal method. Results in table 10 show that nitric acid, oxalic acid and malic acid are equally effective and citric acid and tartaric acid are slightly less effective in the disclosed method. Sulfate binding efficiency varied between 45-56 mg sulfur (about 140-170 mg sulfate) per gram of solid chitosan composition.

### EXAMPLE 11 - REMOVAL OF SULFATE FROM MINE A DEWATERING WATER IN FIELD CONDITIONS WITH CONTINUOUS PROCESS

Sulfate removal with solid chitosan composition in a process was piloted in field conditions with dewatering water of mine A. Before sulfate removal dewatering water was treated with ferric sulfate to remove dissolved heavy metal ions and solid particles and clarified. Main constituents of the dewatering water used in the chitosan tests were sulfate (1200 mg/l), calcium (340 mg/l), magnesium (100 mg/l), chloride (90 mg/l) and sodium (60 mg/l), pH of the water was about 7.5 and temperature +11 to 13°C. Sulfate cannot be removed from mine A dewatering water by commonly used calcium hydroxide precipitation.

Sulfate removal was piloted with the following system: Dewatering water was continuously pumped to a receiving tank (fixed water level, volume 1.45 m³) from which dewatering water flowed by gravity to a mixing tank (paddle mixer, volume 150 1); powder doser was used to add chitosan flakes (size 2-4 mm) to the mixing tank and pH of the mixing tank was regulated with Hach SC 100 controller connected with Hach pHD sensor and Grundfos DDA 12-10 chemical dosing pump (pump was connected to oxalic acid solution container); excess water-chitosan flake composition from the mixing tank flowed freely to a microfiber filter bag (25 µm pore size) for chitosan flake separation; water flow (and retention time in the mixing tank) of the system was adjusted with a valve between the receiving tank and the mixing tank. Each pilot-test lasted 3 to 8 hours, retention time in the mixing tank was 22 min (water flow 0.4 m³/h and chitosan dosing 5.3 kg/m³) or 36 min (water flow 0.25 m³/h and chitosan dosing 8.2 kg/m³). Samples for sulfate concentration measurement were taken from the receiving tank and after chitosan treatment (after chitosan flake separation) and the samples were filtered through a 0.45 µm filter. Dissolved sulfate concentration from each filtered sample was determined by determining dissolved sulfur with Panalytical Epsilon3-XL EDXRF benchtop spectrometer. The results are presented in table 11.

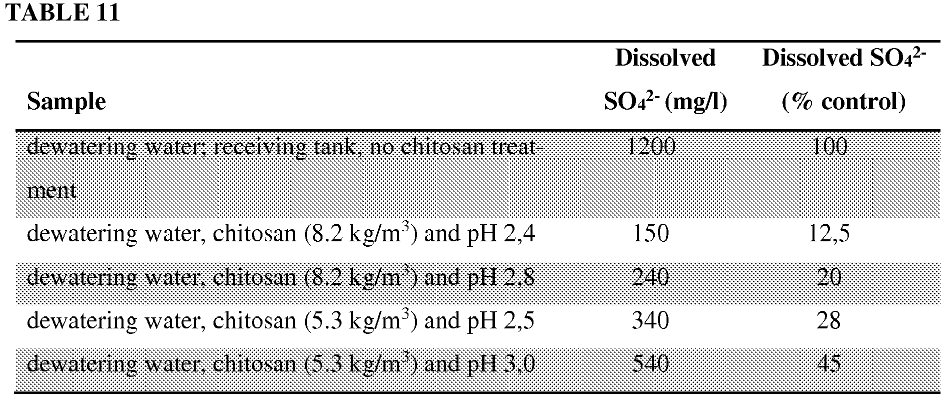

Example 11 shows that chitosan flakes removed sulfate efficiently from mine A dewatering water in piloted continuous process. The piloted process was really simple, required minimal energy input and the process was built outside, next to a dewatering water clarification pond with basic equipment. Water flow-through the process took 25 (chitosan dose 5.3 kg/m³) to 38 minutes (chitosan dose 8.2 kg/m³). Chitosan flake treatment reduced sulfate level from mine A dewatering water from 1200 mg/l down to 150 mg/l with chitosan dose 8.2 kg/m³ and to 340 mg/l with chitosan dose 5.3 kg/m³. Sulfate removal efficiency of the piloted continuous process was pH dependent: the process was clearly more efficient around pH 2.5 than around pH 3. Sulfate binding efficiency was 130 to 160 mg sulfate per gram of chitosan flakes. It is obvious those skilled in process technology that on the basis of this simple continuous process several processes can be designed and developed for removal of sulfate from aqueous mediums.

### EXAMPLE 12 - REMOVAL OF SULFATE FROM INFILTRATION WATER IN FIELD CONDITIONS WITH CONTINUOUS PROCESS

Sulfate removal with solid chitosan composition in a continuous process was piloted in field conditions with infiltration water from a tailings pond of an enrichment plant E. Main constituents of the infiltration water used in the chitosan tests were sulfate (140 mg/l), sodium (100 mg/l) and potassium (90 mg/l), pH of the water was about 7.8 and temperature +11 to 13°C. Sulfate cannot be removed from enrichment plant E infiltration water by commonly used calcium hydroxide precipitation.

Sulfate removal was piloted with the following system: Infiltration water was continuously pumped from a 10 m³ truck tank to a receiving tank (fixed water level, volume 1.45 m³) from which infiltration water flowed by gravity to a mixing tank (paddle mixer, volume 150 l); powder doser was used to add chitosan flakes (size 2-4 mm) to the mixing tank and pH of the mixing tank was regulated with Hach SC 100 controller connected with Hach pHD sensor and Grundfos DDA 12-10 chemical dosing pump (pump was connected to oxalic acid solution container); excess water-chitosan flake composition from the mixing tank flowed freely to a microfiber filter bag (5 µm pore size) for chitosan flake separation; and water flow (and retention time in the mixing tank) of the system was adjusted with a valve between the receiving tank and the mixing tank. Each pilot-test lasted 3 to 6 hours, retention time in the mixing tank was 13 min (water flow 0.7 m³/h and chitosan dosing 1.1 kg/m³) or 18 min (water flow 0.5 m³/h and chitosan dosing 1.6 kg/m³). Samples for sulfate concentration measurement were taken from the receiving tank and after chitosan treatment (after chitosan flake separation) and the samples were filtered through a 0.45 µm filter. Dissolved sulfate concentration from each filtered sample was determined by determining dissolved sulfur with Panalytical Epsilon3-XL EDXRF benchtop spectrometer. The results are presented in table 12.

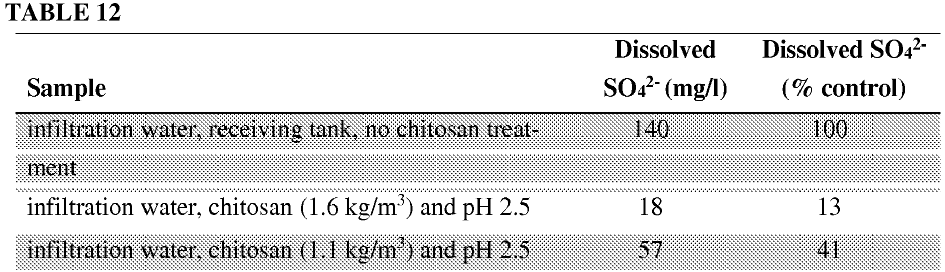

Example 12 shows that chitosan flakes removed most of the sulfate from infiltration water in piloted continuous process. The piloted process was really simple, required minimal energy input and the process was built outside, next to a process cooling water pond with basic equipment. Water flow-through in the process took 20 (chitosan dose 1.1 kg/m³) to 25 minutes (chitosan dose 1.6 kg/m³). Chitosan flake treatment reduced sulfate level from infiltration water from 140 mg/l down to 18 mg/l with chitosan dose 1.6 kg/m³ and to 57 mg/l with chitosan dose 1.1 kg/m³. It is obvious those skilled in process technology that on the basis of this simple continuous process several processes can be designed and developed for removal of sulfate from aqueous mediums.

## Claims

1. A method for removing sulfur substances from an aqueous medium, comprising:
(a) combining solid material comprising 2-amino-2-deoxy-d-glucopyranose structural units and an aqueous medium comprising sulfur substances to form a composition;
(b) controlling, and if necessary adjusting, and keeping the pH of the composition at a value lower than or equal to 3.5 with a non-chloride substance, during binding of sulfur substances to the solid material; and
(c) separating the solid material from the aqueous medium to remove the sulfur substances;
wherein the non-chloride substance is nitric acid, phosphoric acid, citric acid, oxalic acid, malic acid, tartaric acid, EDTA, a bisphosphonate or a cation exchanger, or any combination thereof.

2. The method of claim 1, wherein the solid material comprising 2-amino-2-deoxy-d-glucopyranose structural units is selected from the group consisting of chitin, chitosan, chitin derivative, chitosan derivative, any combination thereof, and any solid material wherein 2-amino-2-deoxy-d-glucopyranose structural units are attached, preferably from chitin, chitosan, chitin derivative, chitosan derivative and any combination thereof.

3. The method of claim 2, wherein the any solid material wherein 2-amino-2-deoxy-d-glucopyranose structural units are attached comprises non-chitinous modified polymers, magnetic beads or nanoparticles, which comprise 2-amino-2-deoxy-d-glucopyranose structural units, and wherein the any solid material preferably comprises at least 0.2%, more preferably at least 1.0%, 2-amino-2-deoxy-d-glucopyranose structural units by weight of the solid material.

4. The method of claim 1, wherein the solid material is in the form of powder, flakes, beads, nanoparticles, fibers, membranes or sponges, or any combination thereof.

5. The method according to any one of the preceding claims, wherein the solid material concentration in the composition of step (a) is 0.2-50 g/l, preferably 0.5-20 g/l and even more preferably 1.0-10 g/l.

6. The method of claim 1, wherein the solid material in the composition is chitosan or chitin in an amount of 0.5-20 g/l, preferably 1.0-10 g/l, preferably chitosan in the form of chitosan flakes.

7. The method according to any one of the preceding claims, wherein the sulfur substance is
- sulfate (SO₄²⁻) or bisulfate (HSO₄⁻) or their mixture; or
- sulfite (SO₃²⁻) , bisulfite (HSO₃⁻), metabisulfite (S₂O₅²⁻), sulfide (S²⁻), bisulfide (HS⁻), thiosulfate (S₂O₃²⁻), dithionate (S₂O₆²⁻), sulfur dioxide (SO₂), hydrogen sulfide (H₂S) or any combination thereof and wherein the sulfur substance is oxidized to sulfate prior to step (a).

8. The method according to any one of the preceding claims, wherein the solid material comprising 2-amino-2-deoxy-d-glucopyranose structural units and the aqueous medium comprising sulfur substances have a contact time of 1 to 30 min, preferably 1 to 15 min, during the sulfur binding reaction when the temperature is about +2 to +60°C.

9. The method according to any one of the preceding claims, wherein the solid material is separated from the aqueous medium by filtration, pressure filtration, sieving, centrifugation, cyclonic separation, flotation, sedimentation or by binding to solid support, and wherein acidity of the aqueous medium from step (c) is neutralized with any alkaline compound.

10. The method of any one of the preceding claims wherein the method is carried out as a continuous process or as a batch process.

11. The method according to any one of the preceding claims, wherein the aqueous medium comprising sulfur substances has been treated before step (a) with a water treatment or purification process comprising one or more of:
a. removal of dissolved metal ions as hydroxides, carbonates or sulfides;
b. removal of dissolved sulfate ions with lime as gypsum;
c. removal of harmful metals and/or suspended solids with coagulation - flocculation;
d. oxidization of inorganic and/or organic compounds (with air, hydrogen peroxide, chlorites, permanganates, Fenton-reaction etc.);
e. removal of solid particles from water with sedimentation, coagulation - flocculation, flotation or filtration,
f. removal of sludge e.g. by centrifugation, filtration, pressure filtration or clarification; and/or
g. removal of dissolved salts e.g. by membrane technologies.

12. The method of claim 1, wherein the solid material comprising 2-amino-2-deoxy-d-glucopyranose structural units is filled in a column and the aqueous medium comprising sulfur substances is run through the column and wherein acidic material for pH adjustment and control is added to the aqueous medium before entering the column.

13. The method according to any one of the preceding claims wherein the concentration of sulfur substances in the starting aqueous medium is from tens to several thousand mg/l, for example 40 - 35 000 mg/l, or 100- 10 000 mg/l, preferably 200 - 2000 mg/l.

14. The method according to any one of the preceding claims, wherein 150 - 300 mg/l sulfate per gram of the solid material comprising 2-amino-2-deoxy-d-glucopyranose structural units is removed from the aqueous medium.

15. A composition comprising solid material comprising 2-amino-2-deoxy-d-glucopyranose structural units for sulfate binding and solid acidic material for pH adjustment, wherein the solid acidic material is preferably crystalline organic acid, and wherein the solid acidic material is selected from the list of citric acid, oxalic acid, malic acid, tartaric acid, EDTA, a solid bisphosphonate or a cation exchanger, or any combination thereof.

16. Use of solid material comprising 2-amino-2-deoxy-d-glucopyranose structural units for removing sulfur substances from an aqueous medium, wherein said solid material is combined with the aqueous medium to form a composition wherein the pH is kept at a value lower than or equal to 3.5 with a non-chloride substance, during binding of sulfur substances to the solid material, wherein the non-chloride substance is selected from the group consisting of nitric acid, phosphoric acid, citric acid, oxalic acid, malic acid, tartaric acid, EDTA, a bisphosphonate, a cation exchanger, and any combination thereof.

17. The use according to claim 16, wherein the solid material is selected from the group consisting of chitin, chitosan, chitin derivative, chitosan derivative, any combination thereof, and any solid material wherein 2-amino-2-deoxy-d-glucopyranose structural units are attached.

## Patentansprüche

1. Verfahren zum Entfernen von Schwefelsubstanzen aus einem wässrigen Medium, umfassend:
(a) Kombinieren von festem Material, umfassend 2-Amino-2-deoxy-d-glucopyranose-Struktureinheiten und einem wässrigen Medium, umfassend Schwefelsubstanzen, um eine Zusammensetzung zu bilden;
(b) Regeln, und falls nötig, Einstellen und Beibehalten des pH-Werts der Zusammensetzung während des Bindens von Schwefelsubstanzen an das feste Material mit einer Nichtchlorid-Substanz bei einem Wert niedriger als oder gleich 3,5; und
(c) Trennen des festen Materials von dem wässrigen Medium, um die Schwefelsubstanzen zu entfernen;
wobei die Nichtchlorid-Substanz Salpetersäure, Phosphorsäure, Zitronensäure, Oxalsäure, Äpfelsäure, Weinsäure, EDTA, ein Bisphosphonat oder ein Kationenaustauscher oder beliebige Kombination davon ist.

2. Verfahren nach Anspruch 1, wobei das feste Material, umfassend 2-Amino-2-deoxy-d-glucopyranose-Struktureinheiten, ausgewählt ist aus der Gruppe, bestehend aus Chitin, Chitosan, Chitinderivat, Chitosanderivat, beliebiger Kombination davon und beliebigem festen Material, worin 2-Amino-2-deoxy-d-glucopyranose-Struktureinheiten gebunden sind, vorzugsweise aus Chitin, Chitosan, Chitinderivat, Chitosanderivat und beliebiger Kombination davon.

3. Verfahren nach Anspruch 2, wobei das beliebige feste Material, worin 2-Amino-2-deoxy-d-glucopyranose-Struktureinheiten gebunden sind, nicht mit Chitin modifizierte Polymere, Magnetkügelchen oder Nanopartikel umfasst, die 2-Amino-2-deoxy-d-glucopyranose-Struktureinheiten umfassen, und wobei das beliebige feste Material vorzugsweise zumindest 0,2 %, mehr bevorzugt zumindest 1,0 %, 2-Amino-2-deoxy-d-glucopyranose-Struktureinheiten, nach Gewicht des festen Materials, umfasst.

4. Verfahren nach Anspruch 1, wobei das feste Material in Form von Pulver, Flocken, Kügelchen, Nanopartikeln, Fasern, Membranen oder Schwämmen oder beliebiger Kombination davon vorliegt.

5. Verfahren nach einem der vorstehenden Ansprüche, wobei die Konzentration des festen Materials in der Zusammensetzung von Schritt (a) 0,2-50 g/l, vorzugsweise 0,5-20 g/l und noch mehr bevorzugt 1,0-10 g/l beträgt.

6. Verfahren nach Anspruch 1, wobei das feste Material in der Zusammensetzung Chitosan oder Chitin in einer Menge von 0,5-20 g/l, vorzugsweise 1,0-10 g/l, vorzugsweise Chitosan in Form von Chitosanflocken ist.

7. Verfahren nach einem der vorstehenden Ansprüche, wobei die Schwefelsubstanz
- Sulfat (SO₄²⁻) oder Bisulfat (HSO₄⁻) oder deren Mischung; oder
- Sulfit (SO₃²⁻), Bisulfit (HSO₃⁻), Metabisulfit (S₂O₅²⁻), Sulfid (S²⁻), Bisulfid (HS⁻), Thiosulfat (S₂O₃²⁻), Dithionat (S₂O₆²⁻), Schwefeldioxid (SO₂), Schwefelwasserstoff (H₂S) oder beliebige Kombination davon ist und wobei die Schwefelsubstanz vor Schritt (a) zu Sulfat oxidiert wird.

8. Verfahren nach einem der vorstehenden Ansprüche, wobei das feste Material, umfassend 2-Amino-2-deoxy-d-glucopyranose-Struktureinheiten, und das wässrige Medium, umfassend Schwefelsubstanzen, eine Kontaktzeit von 1 bis 30 min, vorzugsweise 1 bis 15 min, während der Schwefelbindungsreaktion aufweisen, wenn die Temperatur etwa +2 bis +60 °C beträgt.

9. Verfahren nach einem der vorstehenden Ansprüche, wobei das feste Material durch Filtration, Druckfiltration, Sieben, Zentrifugation, Zyklonabscheidung, Flotation, Sedimentation oder durch Binden an einen festen Träger von dem wässrigen Medium getrennt wird, und wobei Acidität des wässrigen Mediums von Schritt (c) mit einer alkalischen Verbindung neutralisiert wird.

10. Verfahren nach einem der vorstehenden Ansprüche, wobei das Verfahren als ein kontinuierlicher Prozess oder als ein diskontinuierlicher Prozess durchgeführt wird.

11. Verfahren nach einem der vorstehenden Ansprüche, wobei das wässrige Medium, umfassend die Schwefelsubstanzen, vor Schritt (a) mit einem Wasserbehandlungs- oder Reinigungsprozess behandelt wurde, umfassend eines oder mehrere von:
a. Entfernung von gelösten Metallionen als Hydroxide, Carbonate oder Sulfide;
b. Entfernung von gelösten Sulfationen mit Kalk als Gips;
c. Entfernung von gefährlichen Metallen und/oder suspendierten Feststoffen mit Koagulation - Ausflockung;
d. Oxidation von anorganischen und/oder organischen Verbindungen (mit Luft, Wasserstoffperoxid, Chloriten, Permanganaten, Fenton-Reaktion usw.);
e. Entfernung von festen Partikeln aus Wasser mit Sedimentation, Koagulation - Ausflockung, Flotation oder Filtration,
f. Entfernung von Schlamm, z. B. durch Zentrifugation, Filtration, Druckfiltration oder Klärung; und/oder
g. Entfernung von gelösten Salzen, z. B. durch Membrantechnologien.

12. Verfahren nach Anspruch 1, wobei das feste Material, umfassend 2-Amino-2-deoxy-d-glucopyranose-Struktureinheiten, in eine Säule gefüllt wird und das wässrige Medium, umfassend Schwefelsubstanzen, durch die Säule laufen gelassen wird, und wobei saures Material zur pH-Wert-Einstellung und -Regelung vor dem Eintreten in die Säule zu dem wässrigen Medium hinzugefügt wird.

13. Verfahren nach einem der vorstehenden Ansprüche, wobei die Konzentration der Schwefelsubstanzen in dem wässrigen Ausgangsmedium von Dutzenden bis zu mehreren Tausenden mg/l, beispielsweise 40 - 35000 mg/l oder 100 - 10000 mg/l, vorzugsweise 200 - 2000 mg/l beträgt.

14. Verfahren nach einem der vorstehenden Ansprüche, wobei 150 - 300 mg/l Sulfat pro Gramm des festen Materials, umfassend 2-Amino-2-deoxy-d-glucopyranose-Struktureinheiten, aus dem wässrigen Medium entfernt wird.

15. Zusammensetzung, umfassend festes Material, umfassend 2-Amino-2-deoxy-d-glucopyranose-Struktureinheiten zum Sulfatbinden und festes saures Material zur pH-Wert-Einstellung, wobei das feste saure Material vorzugsweise kristalline organische Säure ist und wobei das feste saure Material ausgewählt ist aus der Liste von Zitronensäure, Oxalsäure, Äpfelsäure, Weinsäure, EDTA, einem festen Bisphosphonat oder einem Kationenaustauscher oder beliebigen Kombination davon.

16. Verwendung von festem Material, umfassend 2-Amino-2-deoxy-d-glucopyranose-Struktureinheiten, zum Entfernen von Schwefelsubstanzen aus einem wässrigen Medium, wobei das feste Material mit dem wässrigen Medium kombiniert wird, um eine Zusammensetzung zu bilden, worin der pH-Wert mit einer Nichtchlorid-Substanz während des Bindens von Schwefelsubstanzen an das feste Material bei einem Wert niedriger als oder gleich 3,5 gehalten wird, wobei die Nichtchlorid-Substanz ausgewählt ist aus der Gruppe, bestehend aus Salpetersäure, Phosphorsäure, Zitronensäure, Oxalsäure, Äpfelsäure, Weinsäure, EDTA, einem Bisphosphonat, einem Kationenaustauscher und einer beliebigen Kombination davon.

17. Verwendung nach Anspruch 16, wobei das feste Material ausgewählt ist aus der Gruppe, bestehend aus Chitin, Chitosan, Chitinderivat, Chitosanderivat, beliebiger Kombination davon und beliebigem festen Material, worin 2-Amino-2-deoxy-d-glucopyranose-Struktureinheiten gebunden sind.

## Revendications

1. Procédé d'élimination de substances soufrées d'un milieu aqueux, comprenant :
(a) la combinaison d'une matière solide comprenant des motifs structuraux 2-amino-2-désoxy-d-glucopyranose et d'un milieu aqueux comprenant des substances soufrées pour former une composition ;
(b) la régulation et, si nécessaire, l'ajustement et le maintien du pH de la composition à une valeur inférieure ou égale à 3,5 avec une substance sans chlorure, pendant la liaison des substances soufrées à la matière solide ; et
(c) la séparation de la matière solide du milieu aqueux pour éliminer les substances soufrées ;
dans lequel la substance sans chlorure est l'acide nitrique, l'acide phosphorique, l'acide citrique, l'acide oxalique, l'acide malique, l'acide tartrique, l'EDTA, un bisphosphonate ou un échangeur de cations, ou n'importe quelle combinaison de ceux-ci.

2. Procédé selon la revendication 1, dans lequel la matière solide comprenant des motifs structuraux 2-amino-2-désoxy-d-glucopyranose est sélectionnée dans le groupe consistant en une chitine, un chitosane, un dérivé de chitine, un dérivé de chitosane, n'importe quelle combinaison de ceux-ci et n'importe quelle matière solide dans laquelle des motifs structuraux 2-amino-2-désoxy-d-glucopyranose sont liés, de préférence une chitine, un chitosane, un dérivé de chitine, un dérivé de chitosane et n'importe quelle combinaison de ceux-ci.

3. Procédé selon la revendication 2, dans lequel la matière solide dans laquelle des motifs structuraux 2-amino-2-désoxy-d-glucopyranose sont liés comprend des polymères modifiés non chitineux, des billes magnétiques ou des nanoparticules, qui comprennent des motifs structuraux 2-amino-2-désoxy-d-glucopyranose, et dans lequel la matière solide comprend de préférence au moins 0,2 %, plus préférentiellement au moins 1,0 %, de motifs structuraux 2-amino-2-désoxy-d-glucopyranose en poids de la matière solide.

4. Procédé selon la revendication 1, dans lequel la matière solide est sous forme de poudre, de flocons, de billes, de nanoparticules, de fibres, de membranes ou d'éponges, ou n'importe quelle combinaison de ceux-ci.

5. Procédé selon l'une quelconque des revendications précédentes, dans lequel la concentration en matière solide dans la composition de l'étape (a) est de 0,2 à 50 g/l, de préférence de 0,5 à 20 g/l et plus préférentiellement de 1,0 à 10 g/l.

6. Procédé selon la revendication 1, dans lequel la matière solide dans la composition est un chitosane ou une chitine en une quantité de 0,5 à 20 g/l, de préférence de 1,0 à 10 g/l, de préférence un chitosane sous forme de flocons de chitosane.

7. Procédé selon l'une quelconque des revendications précédentes, dans lequel la substance soufrée est
- un sulfate (SO₄²⁻) ou un bisulfate (HSO₄⁻) ou leur mélange ; ou
- un sulfite (SO₃²⁻), un bisulfite (HSO₃⁻), un métabisulfite (S₂O₅²⁻), un sulfure (S²⁻), un bisulfure (HS⁻), un thiosulfate (S₂O₃²⁻), un dithionate (S₂O₆²⁻), le dioxyde de soufre (SO₂), le sulfure d'hydrogène (H₂S) ou n'importe quelle combinaison de ceux-ci et dans lequel la substance soufrée est oxydée en sulfate avant l'étape (a).

8. Procédé selon l'une quelconque des revendications précédentes, dans lequel la matière solide comprenant des motifs structuraux 2-amino-2-désoxy-d-glucopyranose et le milieu aqueux comprenant des substances soufrées ont un temps de contact de 1 à 30 min, de préférence de 1 à 15 min, pendant la réaction de liaison du soufre quand la température est d'environ +2 à +60 °C.

9. Procédé selon l'une quelconque des revendications précédentes, dans lequel la matière solide est séparée du milieu aqueux par filtration, filtration sous pression, tamisage, centrifugation, séparation cyclonique, flottation, sédimentation ou par liaison à un support solide, et dans lequel l'acidité du milieu aqueux de l'étape (c) est neutralisée avec n'importe quel composé alcalin.

10. Procédé selon l'une quelconque des revendications précédentes dans lequel le procédé est mis en œuvre en tant que procédé continu ou en tant que procédé discontinu.

11. Procédé selon l'une quelconque des revendications précédentes, dans lequel le milieu aqueux comprenant des substances soufrées a été traité avant l'étape (a) avec un procédé de traitement ou de purification d'eau comprenant un ou plusieurs parmi :
a. l'élimination des ions métalliques dissous sous forme d'hydroxydes, de carbonates ou de sulfures ;
b. l'élimination des ions sulfate dissous avec de la chaux comme le gypse ;
c. l'élimination des métaux nocifs et/ou des solides en suspension par coagulation - floculation ;
d. l'oxydation des composés inorganiques et/ou organiques (avec de l'air, du peroxyde d'hydrogène, des chlorites, des permanganates, la réaction de Fenton, etc.) ;
e. l'élimination des particules solides de l'eau par sédimentation, coagulation - floculation, flottation ou filtration,
f. l'élimination des boues, par exemple par centrifugation, filtration, filtration sous pression ou clarification ; et/ou
g. l'élimination des sels dissous, par exemple par les technologies par membrane.

12. Procédé selon la revendication 1, dans lequel la matière solide comprenant des motifs structuraux de 2-amino-2-désoxy-d-glucopranranose est introduite dans une colonne et le milieu aqueux comprenant des substances soufrées est passé à travers la colonne et dans lequel une matière acide d'ajustement et de régulation du pH est ajoutée au milieu aqueux avant d'entrer dans la colonne.

13. Procédé selon l'une quelconque des revendications précédentes dans lequel la concentration en substances soufrées dans le milieu aqueux de départ est de quelques dizaines à plusieurs milliers de mg/l, par exemple 40 à 35 000 mg/l, ou 100 à 10 000 mg/l, de préférence de 200 à 2000 mg/l.

14. Procédé selon l'une quelconque des revendications précédentes, dans lequel 150 à 300 mg/l de sulfate par gramme de la matière solide comprenant des motifs structuraux 2-amino-2-désoxy-d-glucopyranose sont retirés du milieu aqueux.

15. Composition comprenant une matière solide comprenant des motifs structuraux 2-amino-2-désoxy-d-glucopyrose pour liaison au sulfate et une matière acide solide pour l'ajustement du pH, dans laquelle la matière acide solide est de préférence un acide organique cristallin, et dans laquelle la matière acide solide est sélectionnée parmi la liste comprenant l'acide citrique, l'acide oxalique, l'acide malique, l'acide tartrique, l'EDTA, un bisphosphonate solide ou un échangeur de cations, ou n'importe quelle combinaison de ceux-ci.

16. Utilisation d'une matière solide comprenant des motifs structuraux 2-amino-2-désoxy-d-glucopyranose pour éliminer les substances soufrées d'un milieu aqueux, dans laquelle ladite matière solide est combinée avec le milieu aqueux pour former une composition dans laquelle le pH est maintenu à une valeur inférieure ou égale à 3,5 avec une substance sans chlorure, pendant la liaison des substances soufrées à la matière solide, dans laquelle la substance sans chlorure est sélectionnée dans le groupe consistant en l'acide nitrique, l'acide phosphorique, l'acide citrique, l'acide oxalique, l'acide malique, l'acide tartrique, l'EDTA, un bisphosphonate, un échangeur de cations, et n'importe quelle combinaison de ceux-ci.

17. Utilisation selon la revendication 16, dans laquelle la matière solide est sélectionnée dans le groupe consistant en une chitine, un chitosane, un dérivé de chitine, un dérivé de chitosane, n'importe quelle combinaison de ceux-ci, et n'importe quelle matière solide dans laquelle des motifs structuraux 2-amino-2-désoxy-d-glucopyranose sont liés.
